# EUROPÄISCHE PATENTSCHRIFT

(11) **EP 3 514 815 B1**
(45) Veröffentlichungstag und Bekanntmachung des Hinweises auf die Patenterteilung: **15.11.2023**
(21) Anmeldenummer: 19151303.5
(22) Anmeldetag: 11.01.2019
(51) Int. Cl.: H01H 9/54

(54) **ELEKTRISCHE SCHUTZSCHALTUNGSANORDNUNG**
ELECTRICAL CIRCUIT PROTECTION ASSEMBLY
DISPOSITIF FORMANT CIRCUIT DE PROTECTION ÉLECTRIQUE

(30) Priorität: 22.01.2018 DE 102018101312
(43) Veröffentlichungstag der Anmeldung: 24.07.2019
(73) Patentinhaber: Eaton Intelligent Power Limited, Dublin 4 (IE)
(72) Erfinder: ASKAN, Kenan, 1090 Vienna (AT); BARTONEK, Michael, 1080 Vienna (AT)
(74) Vertreter: Epping - Hermann - Fischer

(56) Entgegenhaltungen:
- EP-A1- 2 843 837
- WO-A1-92/10018
- WO-A1-2014/094847
- WO-A1-2017/174328
- WO-A1-2017/220443
- GB-A- 2 520 959
- US-A1- 2012 187 089
- US-A1- 2016 322 809

## Beschreibung

Die Erfindung betrifft eine elektrische Schutzschaltungsanordnung gemäß dem Patentanspruch 1.

Es ist bekannt elektrische Ströme durch Parallelschaltung auf mehrere Zweige aufzuteilen, wodurch der gesamte Strom entsprechend Kirchhoffs erstem Gesetz auf die einzelnen Parallelzweige aufgeteilt wird.

Es sind weiters sog. hybride Schutzschaltgerät etwa aus der WO 2015/028634 A1 der Anmelderin bekannt. Derartige hybride Schaltgeräte weisen zahlreiche Vorteile gegenüber herkömmlichen rein mechanischen Schutzschaltern auf. Allerdings hat sich gezeigt, dass es nicht möglich ist die Strombelastbarkeit einer elektrischen Strecke bzw. deren notfalltechnische Absicherung durch parallel Schalten hybrider Schaltgeräte gemäß der WO 2015/028634 A1 zu erhöhen. Gewisse Eigenheiten der, in derartigen Schaltgeräten verbauten mechanischen Schaltkontakte sowie der Halbleiterelemente führt zu einer erheblichen Drift der Innenwiderstände derartiger parallel geschalteter hybrider Schaltgeräte, wodurch gleichzeitig auch die Stromaufteilung zwischen derartigen Schaltgeräten driftet. Innerhalb kurzer Zeit nach Inbetriebnahme führt dies dazu, dass die Stromaufteilung ungleichmäßig ist.

Die US 2016/322809 A1 beschreibt einen Schutzschalter zum lichtbogenfreien Unterbrechen eines DC-Netzes.

Die US 2012/187089 A1 beschreibt einen Hochleistungsschutzschalter für ein Mehrphasennetz. Die einzelnen Phasen sind nicht parallelgeschaltet.

Die WO 2017/220443 A1 zeigt eine Schaltungsanordnung gemäß dem Oberbegriff von Anspruch 1 mit mehreren Hybridschaltkreisen in Parallelschaltung.

Aus der EP 2 843 837 A1 geht eine Schaltungsanordnung mit mehreren Parallelleitungsstrecken hervor, wobei in jeder dieser Leiter eine Halbleiterschaltungsanordnung und eine Strommessteil angeordnet sind.

Aufgabe der Erfindung ist es daher eine elektrische Schutzschaltungsanordnung der vorstehend genannten Art anzugeben, mit welcher die eingangs genannten Nachteile vermieden werden können, mit welcher einfach die Strombelastbarkeit einer elektrischen Schutzschaltungsanordnung sicher und dauerhaft erhöht werden kann.

Erfindungsgemäß wird dies durch die Merkmale des Patentanspruches 1 erreicht.

Dadurch ist es möglich mehrere Solid State Außenleiterstrecken, entweder innerhalb eines einzigen Schaltgeräts oder aber durch parallel Schaltung mehrerer Schaltgeräte, parallel zu schalten, ohne dass es dazu kommt, dass die gesamte Strombelastung oder zumindest ein überwiegender Teil der Strombelastung von nur einer der beteiligten Außenleiterstrecken bewältigt werden kann. Dadurch kann verhindert werden, dass eine der beteiligten Außenleiterstrecken durch übermäßige Verlustleistung schneller altert und ausfällt, als die wenigstens eine andere Außenleiterstrecke. Dadurch kann weiters verhindert werden, dass es im Falle einer Notabschaltung zu einem Totalausfall einer der Außenleiterstrecken kommt.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste Ausführungsform einer gegenständlichen elektrischen Schutzschaltungsanordnung;
Fig. 2 eine erste Ausführungsform eines diskreten Niederspannungs-Schutzschaltgeräts für eine gegenständliche elektrische Schutzschaltungsanordnung;
Fig. 3 eine zweite Ausführungsform einer gegenständlichen elektrischen Schutzschaltungsanordnung mit sieben Niederspannungs-Schutzschaltgeräten gemäß Fig. 2;
Fig. 4 eine zweite Ausführungsform eines diskreten Niederspannungs-Schutzschaltgeräts; und
Fig. 5 eine dritte Ausführungsform einer gegenständlichen elektrischen Schutzschaltungsanordnung.

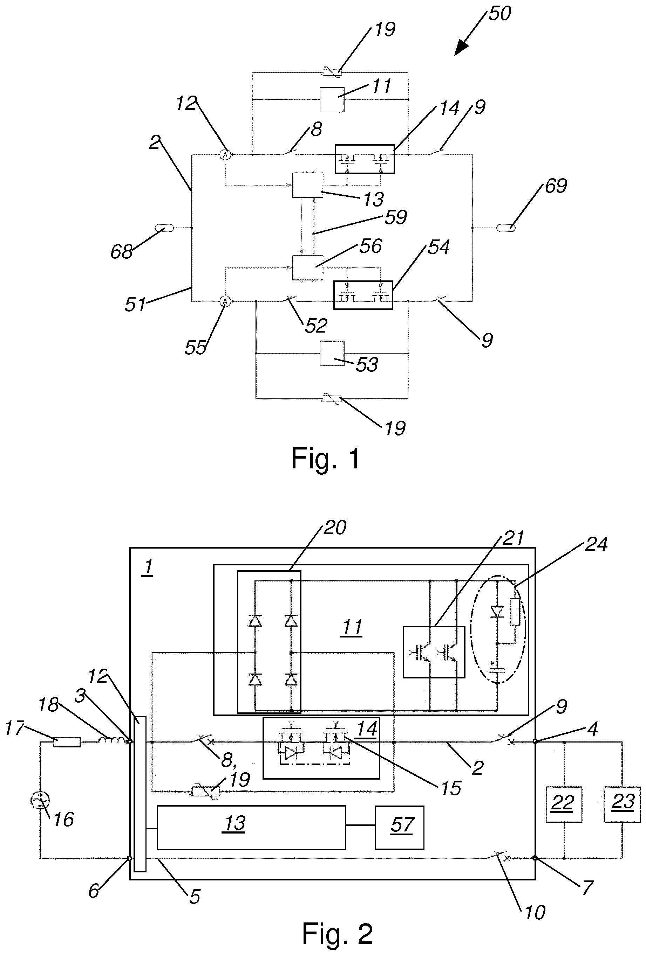

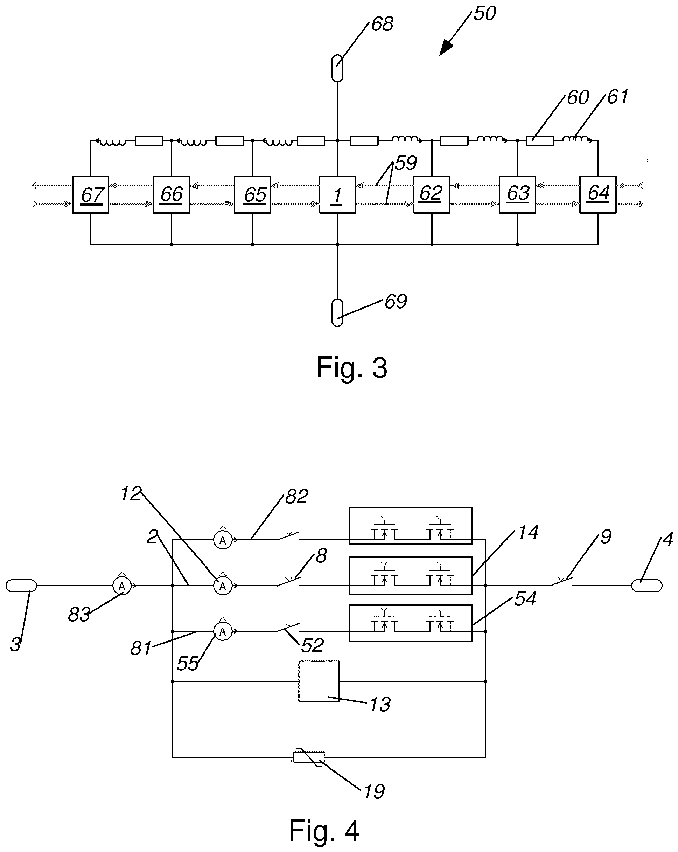

Die Fig. 1 und 3 zeigen jeweils eine elektrische Schutzschaltungsanordnung 50 umfassend eine erste Außenleiterstrecke 2 und eine zweiten Außenleiterstrecke 51, wobei die erste Außenleiterstrecke 2 schaltungstechnisch parallel zur zweiten Außenleiterstrecke 51 angeordnet ist, wobei in der ersten Außenleiterstrecke 2 ein erster mechanischer Bypassschalter 8 angeordnet ist, wobei eine erste Halbleiterschaltungsanordnung 11 parallel zum ersten Bypassschalter 8 geschaltet ist, wobei in der ersten Außenleiterstrecke 2 eine zweite Halbleiterschaltungsanordnung 14 schaltungstechnisch seriell zum ersten Bypassschalter 8 und parallel zur ersten Halbleiterschaltungsanordnung 11 angeordnet ist, wobei in der ersten Außenleiterstrecke 2 eine erste Strommessanordnung 12 angeordnet ist, welche mit einer ersten elektronischen Steuereinheit 13 verbunden ist, wobei die erste elektronische Steuereinheit 13 dazu ausgebildet ist, den ersten Bypassschalter 8, die erste Halbleiterschaltungsanordnung 11 und die zweite Halbleiterschaltungsanordnung 14 anzusteuern, wobei in der zweiten Außenleiterstrecke 51 ein zweiter mechanischer Bypassschalter 52 angeordnet ist, wobei eine dritte Halbleiterschaltungsanordnung 53 parallel zum zweiten Bypassschalter 52 geschaltet ist, wobei in der zweiten Außenleiterstrecke 51 eine vierte Halbleiterschaltungsanordnung 54 schaltungstechnisch seriell zum zweiten Bypassschalter 52 und parallel zur dritten Halbleiterschaltungsanordnung 53 angeordnet ist, wobei in der zweiten Außenleiterstrecke 51 eine zweite Strommessanordnung 55 angeordnet ist, welche mit einer zweiten elektronischen Steuereinheit (56) verbunden ist, wobei die zweite elektronische Steuereinheit 56 dazu ausgebildet ist, den zweiten Bypassschalter 52, die dritte Halbleiterschaltungsanordnung 53 und die vierte Halbleiterschaltungsanordnung 54 anzusteuern.

Die erste elektronische Steuereinheit 13 und die zweite elektronische Steuereinheit 56 sind nachrichtentechnisch verbunden, wobei die erste elektronische Steuereinheit 13 die zweite Halbleiterschaltungsanordnung 14 und die zweite elektronische Steuereinheit 56 die vierte Halbleiterschaltungsanordnung 54 zum Angleichen einer ersten Stromstärke über die erste Außenleiterstrecke 2 und einer zweiten Stromstärke über die zweite Außenleiterstrecke 51 regeln, und/oder wobei die erste elektronische Steuereinheit 13 und die zweite elektronische Steuereinheit 56 bei einer ersten Stromstärke und/oder einer zweiten Stromstärke unterhalb eines vorgebbaren Grenzwertes die zweite Außenleiterstrecke 51 abschalten.

Dadurch ist es möglich mehrere hybride Außenleiterstrecken 2, 51 parallel zu schalten, ohne dass es dazu kommt, dass die gesamte Strombelastung oder zumindest ein überwiegender Teil der Strombelastung von nur einer der beteiligten Außenleiterstrecken 2, 51 bewältigt werden kann. Dadurch kann verhindert werden, dass eine der beteiligten Außenleiterstrecken 2, 51 durch übermäßige Verlustleistung schneller altert und ausfällt, als die wenigstens eine andere Außenleiterstrecke 2, 51. Dadurch kann weiters verhindert werden, dass es im Falle einer Notabschaltung zu einem Totalausfall einer der Außenleiterstrecken 2, 51 kommt.

Die gegenständliche Vorrichtung bzw. Anordnung gemäß den Fig. 1 bis 3 betrifft eine elektrische Schutzschaltungsanordnung 50, welche entweder durch Zusammenschalten mehrerer unabhängiger bzw. eigenständiger oder diskreter Niederspannungs-Schutzschaltgeräte 1 umgesetzt bzw. implementiert werden kann oder aber innerhalb eines einzelnen, entsprechend ausgebildeten Schutzschaltgeräts 1.

Einleitend werden die einzelnen erforderlichen Komponenten anhand des in Fig. 2 dargestellten Niederspannungs-Schutzschaltgeräts 1 beschrieben. Das betreffende Niederspannungs-Schutzschaltgerät 1 zeigt die erste von zwei Außenleiterstrecken 2.

Bei dem gegenständlichen Niederspannungs-Schutzschaltgerät 1 wie auch dem Schutzschaltgerät gemäß der WO 2015/028634 A1 handelt es sich um Niederspannungs-Schutzschaltgeräte. Als Niederspannung wird wie an sich üblich der Bereich bis 1000V Wechselspannung bzw. 1500V Gleichspannung bezeichnet.

Das Schutzschaltgerät 1 gemäß Fig. 2 weist eine Außenleiterstrecke 2 sowie eine Neutralleiterstrecke 5 auf. Die erste Außenleiterstrecke 2 verläuft durch das Schutzschaltgerät 1 von einem Außenleiterversorgungsanschluss 3 zu einem Außenleiterlastanschluss 4. Die Neutralleiterstrecke 5 verläuft durch das Schutzschaltgerät 1 von einem Neutralleiteranschluss 6 zu einem Neutralleiterlastanschluss 7. Die betreffenden Anschlüsse 3, 4, 6, 7 sind jeweils bevorzugt als Schraubanschlussklemmen bzw. Steckanschlussklemmen ausgebildet, und in dem Schutzschaltgerät 1 von außen zugänglich angeordnet.

Das Schutzschaltgerät 1 weist bevorzugt ein Isolierstoffgehäuse auf.

In der erste Außenleiterstrecke 2 ist ein erster mechanischer Bypassschalter 8, bevorzugt mit einfacher Kontaktunterbrechung, angeordnet. Bei dem Schalter gemäß Fig. 2 ist in der Außenleiterstrecke 2 weiters ein erster mechanischer Trennschalter 9 seriell zum ersten Bypassschalter 8 angeordnet. In der Neutralleiterstrecke 5 ist ein zweiter mechanischer Trennschalter 10 angeordnet. Parallel zum ersten Bypassschalter 8 ist eine erste Halbleiterschaltungsanordnung 11 geschaltet.

Weiters ist parallel zum ersten Bypassschalter 8 ein Überspannungsableiter 19 geschaltet.

Das Schutzschaltgerät 1 weist weiters eine erste Strommessanordnung 12 auf, welche in der ersten Außenleiterstrecke 2 angeordnet ist, und welche bevorzugt umfassend einem Shunt-Widerstand ausgebildet ist.

Die erste Strommessanordnung 12 ist mit einer ersten elektronischen Steuereinheit 13 des Schutzschaltgeräts 1 verbunden, welche bevorzugt umfassend einen Mikrocontroller bzw. Mikroprozessor ausgebildet ist. Die erste elektronische Steuereinheit 13 ist dazu ausgebildet, den ersten Bypassschalter 8 und die erste Halbleiterschaltungsanordnung 11, sowie den ersten mechanischen Trennschalter 9 und den zweiten mechanischen Trennschalter 10, anzusteuern, daher diese vorgebbar zu betätigen bzw. zu schalten. Hiezu ist die erste elektronische Steuereinheit 13 mit der ersten Halbleiterschaltungsanordnung 11, sowie weiters mit, insbesondere elektromagnetischen, Betätigungselementen der mechanischen Schalter, daher des ersten Bypassschalters 8, des ersten mechanischen Trennschalters 9 und des zweiten mechanischen Trennschalters 10 bevorzugt schaltungstechnisch verbunden. Die entsprechenden Verbindungen ausgehend von der ersten elektronischen Steuereinheit 13 sind nicht Fig. 2 dargestellt.

Die erste Halbleiterschaltungsanordnung 11 weist gemäß der Ausführungsform in Fig. 2 eine Gleichrichterschaltung 20, welche bevorzugt als Vollbrücke ausgebildet ist, sowie, bei der gegenständlichen Ausführungsform zwei Leistungshalbleiter 21, welche gegenständlich als IGBT ausgebildet sind, als eigentliche Schalt- bzw. Regelelemente auf. Dabei kann auch ein größerer Leistungshalbleiter 21 vorgesehen sein. Die gegenständliche Vorrichtung bzw. Anordnung ist unabhängig von der konkreten Implementierung der ersten Halbleiterschaltungsanordnung 11.

In Fig. 2 ist neben dem eigentlichen Schutzschaltgerät 1 weites die elektrische Umgebung angedeutet. Dabei ist das Versorgungsnetz durch die AC/DC-Netzspannungsquelle 16, den Netzinnenwiderstand 17 und die Netzinduktivität 18 dargestellt. Weiters ist eine elektrische Last 23, sowie ein elektrischer Fehler 22 in Form eines Kurzschlusses dargestellt.

Bevorzugt ist vorgesehen, dass die erste elektronische Steuereinheit 13 weiterhin dazu ausgebildet ist, den ersten mechanischen Trennschalter 9 zu betätigen.

Ebenso ist bevorzugt vorgesehen, dass in der Neutralleiterstrecke 5 ein zweiter mechanischer Trennschalter 10 angeordnet ist, und dass die erste elektronische Steuereinheit 13 vorzugsweise dazu ausgebildet ist, den zweiten mechanischen Trennschalter 10 zu betätigen. Weiters ist parallel zum ersten Bypassschalter 8 sowie der ersten Halbleiterschaltungsanordnung 11 sowie seriell zum ersten Trennschalter 9 bevorzugt ein Überspannungsableiter 19, insbesondere ein Varistor, vorzugsweise ein MOV, schaltungstechnisch angeordnet. MOV steht dabei für Metall Oxide Varistor.

Es ist vorgesehen, dass in der ersten Außenleiterstrecke 2 eine zweite Halbleiterschaltungsanordnung 14 schaltungstechnisch seriell zum ersten Bypassschalter 8 und parallel zur ersten Halbleiterschaltungsanordnung 11 angeordnet ist.

Durch die zweite Halbleiterschaltungsanordnung 14 kann sowohl die Belastung des ersten Bypassschalters 8 als auch der ersten Halbleiterschaltungsanordnung 11 verringert werden. Dadurch kann erreicht werden, dass der Strom bereits bei deutlich geringerer Stromstärke als bei herkömmlichen Schutzschaltgeräten auf die erste Halbleiterschaltungsanordnung 11 kommutiert, wodurch die Belastung der ersten Halbleiterschaltungsanordnung 11 verringert und deren Lebensdauer vergrößert werden kann. Dadurch kann das Auftreten eines Lichtbogens an dem ersten Bypassschalter 8 im Wesentlichen gänzlich vermieden werden, wodurch die Belastung der entsprechenden Schaltkontakte verringert und deren Lebensdauer vergrößert werden kann.

Durch die gegenständlichen Maßnahmen können weitere Vorteile erzielt werden.

Da beim Abschalten kein Lichtbogen auftritt, muss auch kein Lichtbogen gelöscht werden. Es entstehen keine heißen ionisierten Gase, welche erst gekühlt werden müsste, um ein erneutes Zünden eines Lichtbogens zu verhindern. Dadurch kann sowohl die Belastbarkeit der ersten Halbleiterschaltungsanordnung 11 reduziert werden, als auch der gesamte Abschaltvorgang weiter beschleunigt werden, da ein erneutes Zünden eines Lichtbogens gegenständlich nicht mehr zu befürchten ist. Alternativ kann auch die Belastbarkeit der ersten Halbleiterschaltungsanordnung 11 unverändert bleiben und die Öffnungsgeschwindigkeit des ersten Bypassschalters 8 reduziert werden, wodurch dieser einfacher ausgebildet werden kann.

Durch das schnelle Abschalten eines Kurzschluss- bzw- Überlaststromes wird weniger Energie als sonst in Form von Streuinduktivitäten bzw. in der Netzinduktanz gespeichert, wodurch der erste Überspannungsableiter 19 sowie der Snubber 24 geschont wird. Dieser kann aufgrund weiterer Effekte auch kleiner dimensioniert werden.

Da kein Schaltlichtbogen auftritt, ist der Spannungsabfall an der ersten Halbleiterschaltungsanordnung 11 nicht durch die Lichtbogenspannung limitiert.

Bevorzugt ist vorgesehen, dass die zweite Halbleiterschaltungsanordnung 14 bzw. die vierte Halbleiterschaltungsanordnung 54 bidirektional ausgebildet ist. Besonders bevorzugt ist die zweite Halbleiterschaltungsanordnung 14 und die vierte Halbleiterschaltungsanordnung 54 als vier Quadranten-Schaltung ausgebildet, für beide Stromrichtungen und beide Spannungspolaritäten.

Weiters ist bevorzugt vorgesehen, dass die zweite Halbleiterschaltungsanordnung 14 und die vierte Halbleiterschaltungsanordnung 54 umfassend Niederspanungs-MOSFET 15 ausgebildet ist. Die zweite Halbleiterschaltungsanordnung 14 und die vierte Halbleiterschaltungsanordnung 54 befinden sich ständig im Stromfluss, weshalb der Innenwiderstand derselben relevant ist, um eine zu große Verlustleistung an dieser Stelle zu vermeiden.

Bevorzugt sind die Niederspanungs-MOSFET 15 als 20-30V MOSFET gewählt, aufgrund deren sehr geringen Innenwiderstandes, sowie um die Verlustleitung im regulären Betrieb gering zu halten. Der Spannungsabfall an den Niederspanungs-MOSFET 15 dient lediglich dazu den Strom zum Kommutieren auf die erste Halbleiterschaltungsanordnung 11 zu bringen.

Aufgrund der "intrinsic body diode" und Betrieb der MOSFET im dritten Quadranten sind lediglich zwei derartige Niederspanungs-MOSFET 15 für einen bidirektionalen Schalter erforderlich. Durch die hohe Leitfähigkeit können hohe Ströme bei geringen Gate-Spannungen erreicht werden.

Die erste Halbleiterschaltungsanordnung 11 ist entsprechend belastbar ausgebildet, um die hohen Ströme und Spannungsspitzen bei einem Kurzschluss zu schalten. Die erste Halbleiterschaltungsanordnung 11 kann ausgeschaltet werden, sobald die Kontakte des Bypassschalters 8 genügend Kontaktabstand aufweisen.

Die MOSFET 15 weisen jeweils bevorzugt eine Antiparallel-Diode auf, welche auch als Monolithic Body Diode bezeichnet wird.

Es ist weiters vorgesehen, dass die elektrische Schutzschaltungsanordnung 50 eine erste Außenleiterstrecke 2 und mindestens eine zweiten Außenleiterstrecke 51 aufweist, welche schaltungstechnisch parallel zueinander angeordnet sind.

In der zweiten Außenleiterstrecke 51 ist ein zweiter mechanischer Bypassschalter 52 angeordnet, wobei eine dritte Halbleiterschaltungsanordnung 53, welche entsprechend der ersten Halbleiterschaltungsanordnung 11 ausgebildet ist, parallel zum zweiten Bypassschalter 52 geschaltet ist, wobei in der zweiten Außenleiterstrecke 51 eine vierte Halbleiterschaltungsanordnung 54, welche entsprechend der zweiten Halbleiterschaltungsanordnung 14 ausgebildet ist, schaltungstechnisch seriell zum zweiten Bypassschalter 52 und parallel zur dritten Halbleiterschaltungsanordnung 53 angeordnet ist, wobei in der zweiten Außenleiterstrecke 51, analog der ersten Strommessanordnung 12, eine zweite Strommessanordnung 55 angeordnet ist, welche mit einer zweiten elektronischen Steuereinheit 56, welche entsprechend der ersten elektronischen Steuereinheit 13 ausgebildet ist, verbunden ist, wobei die zweite elektronische Steuereinheit 56 dazu ausgebildet ist, den zweiten Bypassschalter 52, die dritte Halbleiterschaltungsanordnung 53 und die vierte Halbleiterschaltungsanordnung 54 anzusteuern. Die Ausführungen zu den Komponenten der ersten Außenleiterstrecke 2 sind entsprechend anzuwenden.

Besonders bevorzugt ist vorgesehen, dass die erste und die zweite Außenleiterstrecke 2, 51, bis auf Bauteiltoleranzen gleich ausgebildet sind.

Die erste elektronische Steuereinheit 13 und die zweite elektronische Steuereinheit 56 sind zur Übertragung von Daten insbesondere den jeweiligen Stromflussdaten, sowie gegebenenfalls von Steuerbefehlen nachrichtentechnisch verbunden.

Es ist weiters vorgesehen, dass die erste elektronische Steuereinheit 13 die zweite Halbleiterschaltungsanordnung 14, und die zweite elektronische Steuereinheit 56 die vierte Halbleiterschaltungsanordnung 54 zum Angleichen einer ersten Stromstärke über die erste Außenleiterstrecke 2 und einer zweiten Stromstärke über die zweite Außenleiterstrecke 51 regeln. Durch eine derartige aktive Regelung über die zweite bzw. vierte Halbleiterschaltungsanordnung 14, 54 kann der Stromfluss über die erste und die zweite Außenleiterstrecke 2, 51 angeglichen werden. Dadurch kann vermieden werden, dass es zu einer einseitigen Überlastung eines der Zweige kommt.

Es ist weiters zudem bzw. alternativ hierzu vorgesehen, dass die erste elektronische Steuereinheit 13 und die zweite elektronische Steuereinheit 56 bei einer ersten Stromstärke und/oder einer zweiten Stromstärke unterhalb eines vorgebbaren Grenzwertes die zweite Außenleiterstrecke 51 abschalten. Dadurch kann eine der beiden Außenleiterstrecken 2, 51 im Stand by betrieben werden, und erst bei entsprechendem Bedarf zugeschaltet und betrieben werden.

Besonders bevorzugt ist vorgesehen, dass die erste und die zweite elektronische Steuereinheit 13, 56 dazu ausgebildet sind, beide beschriebenen Aufgaben wahrzunehmen.

Dabei ist bevorzugt vorgesehen, dass die erste elektronische Steuereinheit 13 eine Gate-Spannung der zweiten Halbleiterschaltungsanordnung 14 regelt, und dass die zweite elektronische Steuereinheit 56 eine Gate-Spannung der vierten Halbleiterschaltungsanordnung 54 regelt. Dadurch ist eine einfache und effiziente Ansteuerung der zweiten bzw. vierten Halbleiterschaltungsanordnung 14, 54 möglich.

Gemäß einer ersten bevorzugten Ausführung einer gegenständlichen elektrischen Schutzschaltungsanordnung 50 ist vorgesehen, dass die erste Außenleiterstrecke 2, der erste mechanische Bypassschalter 8, die erste Halbleiterschaltungsanordnung 11, die zweite Halbleiterschaltungsanordnung 14, die erste Strommessanordnung 12 und die ersten elektronischen Steuereinheit 13 in einem ersten Niederspannungs-Schutzschaltgerät 1 umfassend ein erstes Isolierstoffgehäuse angeordnet sind, wie dies etwa in Fig. 2 dargestellt ist. Das betreffende erste Niederspannungs-Schutzschaltgerät 1 weist zudem eine erste Kommunikationsschnittstelle 57 auf, welche mit der ersten elektronischen Steuereinheit 13 nachrichtentechnisch verbunden ist.

Die erste Kommunikationsschnittstelle 57 kann an sich entsprechend jedem Datenübertragungsverfahren ausgebildet sein. Bevorzugt ist vorgesehen, dass die erste Kommunikationsschnittstelle 57 eine leitungsgebundene Schnittstelle ist, etwa zufolge Ethernet, TCP/IP bzw. EIB, wobei selbstverständlich auch andere Methoden bzw. Standards verwendet werden können.

Gemäß der ersten bevorzugten Ausführung einer gegenständlichen elektrischen Schutzschaltungsanordnung 50 ist ebenfalls vorgesehen, dass die zweite Außenleiterstrecke 51, der zweite mechanische Bypassschalter 52, die dritte Halbleiterschaltungsanordnung 53, die vierte Halbleiterschaltungsanordnung 54, die zweite Strommessanordnung 55 und die zweite elektronischen Steuereinheit 56 in einem zweiten Niederspannungs-Schutzschaltgerät 62 umfassend ein zweites Isolierstoffgehäuse angeordnet sind, dass das zweite Niederspannungs-Schutzschaltgerät 62 eine zweite Kommunikationsschnittstelle aufweist, welche mit der zweiten elektronischen Steuereinheit 56 nachrichtentechnisch verbunden ist. Auch das zweite Niederspannungs-Schutzschaltgerät 62 ist bevorzugt entsprechend Fig. 2 ausgebildet.

Gemäß der ersten bevorzugten Ausführung einer gegenständlichen elektrischen Schutzschaltungsanordnung 50 ist weiters vorgesehen, dass die erste Kommunikationsschnittstelle 57 mit der zweiten Kommunikationsschnittstelle nachrichtentechnisch verbunden ist. Dadurch können, je Erfordernis unterschiedliche Niederspannungs-Schutzschaltgeräte 1, 62, 63, 64, 65, 66, 67 parallel zusammen geschaltet werden.

Bevorzugt ist dabei vorgesehen, dass ein derartiger Aufbau aus diskreten Niederspannungs-Schutzschaltgeräten 1, 62, 63, 64, 65, 66, 67 kaskadierbar ist.

Fig. 3 zeigt einen entsprechenden Aufbau mit einem ersten Niederspannungs-Schutzschaltgerät 1, einem zweiten Niederspannungs-Schutzschaltgerät 62, einem dritten Niederspannungs-Schutzschaltgerät 63, einem vierten Niederspannungs-Schutzschaltgerät 64, einem fünften Niederspannungs-Schutzschaltgerät 65, einem sechsten Niederspannungs-Schutzschaltgerät 66 und einem siebenten Niederspannungs-Schutzschaltgeräte 67, wobei jeweils nur die Außenleiteranschlüsse dargestellt sind, und zudem auch Neutralleiterstrecken je Niederspannungs-Schutzschaltgerät 1, 62, 63, 64, 65, 66, 67 vorgesehen sein können.

Die einzelnen Niederspannungs-Schutzschaltgeräte 1, 62, 63, 64, 65, 66, 67 sind mit den gemeinsamen Anschlüssen 68, 69 elektrisch verbunden. Weiters ist in Fig. 3 der Leitungswiderstand 60 sowie die Leitungsinduktanz 61 dargestellt.

Gemäß einer zweiten bevorzugten Ausführung einer gegenständlichen elektrischen Schutzschaltungsanordnung 50 ist vorgesehen, dass die erste Außenleiterstrecke 2, der erste mechanische Bypassschalter 8, die erste Halbleiterschaltungsanordnung 11, die zweite Halbleiterschaltungsanordnung 14, die erste Strommessanordnung 12 und die ersten elektronischen Steuereinheit 13, die zweite Außenleiterstrecke 51, der zweite mechanische Bypassschalter 52, die dritte Halbleiterschaltungsanordnung 53, die vierte Halbleiterschaltungsanordnung 54, die zweite Strommessanordnung 55 und die zweite elektronischen Steuereinheit 56 gemeinsam in ein und demselben ersten Niederspannungs-Schutzschaltgerät 1 umfassend ein erstes Isolierstoffgehäuse angeordnet sind, und dass die erste elektronische Steuereinheit 13 mit der zweiten elektronischen Steuereinheit 56 nachrichtentechnisch, insbesondere schaltungstechnisch, verbunden ist. Fig. 1 zeigt einen entsprechenden Aufbau, welcher bereits in dieser Form umgesetzt werden kann, oder aber noch um eine Neutralleiterstrecke 5 ergänzt sein kann.

In diesem Zusammenhang ist bevorzugt vorgesehen, dass die erste elektronische Steuereinheit 13 und die zweite elektronische Steuereinheit 56 einstückig, insbesondere zumindest teilweise in einem gemeinsamen Chip, ausgebildet sind. Weiters ist bevorzugt vorgesehen, dass die elektrische Schutzschaltungsanordnung 50 wenigstens eine dritte Außenleiterstrecke aufweist, welche zur ersten Außenleiterstrecke 2 und zweiten Außenleiterstrecke 51 schaltungstechnisch parallel angeordnet ist, wobei selbstverständlich noch weitere Außenleiterstrecken parallel zur ersten und zweiten Außenleiterstrecke 2, 51 vorgesehen sein können.

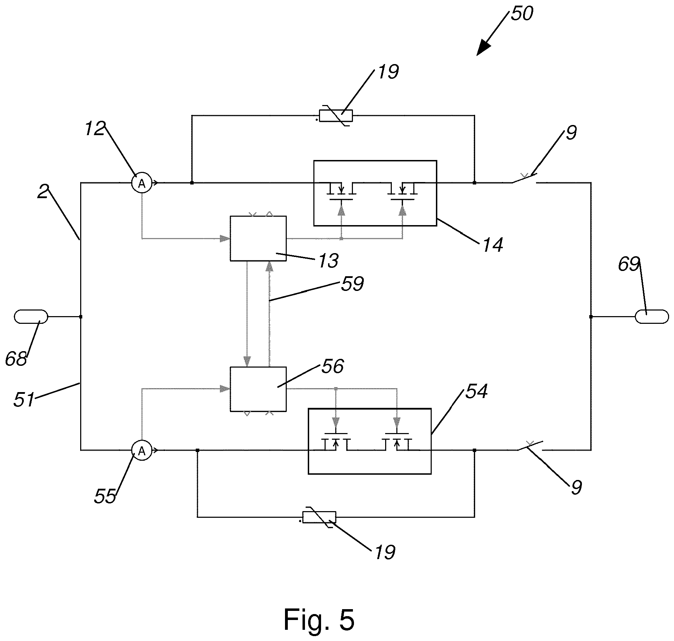

Fig. 5 zeigt eine bevorzugte weitere Ausführung einer elektrischen Schutzschaltungsanordnung 50 umfassend eine erste Außenleiterstrecke 2 und eine zweiten Außenleiterstrecke 51, wobei die erste Außenleiterstrecke 2 schaltungstechnisch parallel zur zweiten Außenleiterstrecke 51 angeordnet ist, wobei in der ersten Außenleiterstrecke 2 eine zweite Halbleiterschaltungsanordnung 14 angeordnet ist, wobei in der ersten Außenleiterstrecke 2 eine erste Strommessanordnung 12 angeordnet ist, welche mit einer ersten elektronischen Steuereinheit 13 verbunden ist, wobei die erste elektronische Steuereinheit 13 dazu ausgebildet ist, die zweite Halbleiterschaltungsanordnung 14 anzusteuern, wobei in der zweiten Außenleiterstrecke 51 eine vierte Halbleiterschaltungsanordnung 54 angeordnet ist, wobei in der zweiten Außenleiterstrecke 51 eine zweite Strommessanordnung 55 angeordnet ist, welche mit einer zweiten elektronischen Steuereinheit 56 verbunden ist, wobei die zweite elektronische Steuereinheit 56 dazu ausgebildet ist, die vierte Halbleiterschaltungsanordnung 54 anzusteuern, wobei die erste elektronische Steuereinheit 13 und die zweite elektronische Steuereinheit 56 nachrichtentechnisch verbunden sind.

Die erste elektronische Steuereinheit 13 regelt die zweite Halbleiterschaltungsanordnung 14 und die zweite elektronische Steuereinheit 56 regelt die vierte Halbleiterschaltungsanordnung 54 zum Angleichen einer ersten Stromstärke über die erste Außenleiterstrecke 2 und einer zweiten Stromstärke über die zweite Außenleiterstrecke 51, und/oder wobei die erste elektronische Steuereinheit 13 und die zweite elektronische Steuereinheit 56 bei einer ersten Stromstärke und/oder einer zweiten Stromstärke unterhalb eines vorgebbaren Grenzwertes die zweite Außenleiterstrecke 51 abschalten.

Dadurch ist es möglich mehrere Solid State Außenleiterstrecken, entweder innerhalb eines einzigen Schaltgeräts oder aber durch parallel Schaltung mehrerer Schaltgeräte, parallel zu schalten, ohne dass es dazu kommt, dass die gesamte Strombelastung oder zumindest ein überwiegender Teil der Strombelastung von nur einer der beteiligten Außenleiterstrecken 2, 51 bewältigt werden kann. Dadurch kann verhindert werden, dass eine der beteiligten Außenleiterstrecken 2, 51 durch übermäßige Verlustleistung schneller altert und ausfällt, als die wenigstens eine andere Außenleiterstrecke 2, 51. Dadurch kann weiters verhindert werden, dass es im Falle einer Notabschaltung zu einem Totalausfall einer der Außenleiterstrecken 2, 51 kommt.

Sämtliche Ausführungen zu den Ausführungsformen gemäß den Fig. 1 bis 3 sind - sofern diese nicht im offensichtlichen Widerspruch zur elektrischen Schutzschaltungsanordnung 50 gemäß Fig. 5 stehen anzuwenden. Insbesondere sämtliche Ausführungen zu Einsatzumgebung und den bevorzugten Ausführungsformen der beteiligten Komponenten, weshalb gegenständlich auf eine Wiedergabe dieser bevorzugten Ausbildungen verzichtet wird. Diese betreffen insbesondere die Implementierung der elektrischen Schutzschaltungsanordnung 50 in einem oder mehreren Geräten.

Gegenüber den Ausführungsform gemäß den Fig. 1 und 2 weist die elektrische Schutzschaltungsanordnung 50 gemäß Fig. 5 keine erste Halbleiterschaltungsanordnung sowie keine Bypassschalter auf. Es handelt sich dabei um einen sog. Solid State Ciruit Breaker.

Es wurde betreffend der Bezeichnung der einzelnen Halbleiterschaltungsanordnungen die eingangs eingeführte Nomenklatur beibehalten.

Anders als bei den anderen Ausführungsformen sind die zweite Halbleiterschaltungsanordnung 14 und die vierte Halbleiterschaltungsanordnung 54 jeweils umfassend Hochspanungs-MOSFET 15 ausgebildet. Diese tragen die komplette Schaltlast bei dieser Art von Schaltungsanordnung. Es können auch andere Arten von Halbleitern vorgesehen sein, etwa IGBT.

Fig. 4 zeigt eine bevorzugte Ausführungsform eines Niederspannungs-Schutzschaltgeräts 1 umfassend eine erste Außenleiterstrecke 2 und wenigstens eine erste Bypassstrecke 81, wobei die erste Außenleiterstrecke 2 schaltungstechnisch parallel zur wenigstens einen ersten Bypassstrecke 81 angeordnet ist, wobei in der ersten Außenleiterstrecke 2 ein erster mechanischer Bypassschalter 8 angeordnet ist, wobei eine erste Halbleiterschaltungsanordnung 11 parallel zum ersten Bypassschalter 8 geschaltet ist, wobei in der ersten Außenleiterstrecke 2 eine zweite Halbleiterschaltungsanordnung 14 schaltungstechnisch seriell zum ersten Bypassschalter 8 und parallel zur ersten Halbleiterschaltungsanordnung 11 angeordnet ist, wobei in der ersten Außenleiterstrecke 2 eine erste Strommessanordnung 12 angeordnet ist, welche mit einer ersten elektronischen Steuereinheit 13 verbunden ist, wobei die erste elektronische Steuereinheit 13 dazu ausgebildet ist, den ersten Bypassschalter 8, die erste Halbleiterschaltungsanordnung 11 und die zweite Halbleiterschaltungsanordnung 14 anzusteuern, wobei in der ersten Bypassstrecke 81 ein zweiter mechanischer Bypassschalter 52 angeordnet ist, wobei in der ersten Bypassstrecke 81 eine vierte Halbleiterschaltungsanordnung 54 schaltungstechnisch seriell zum zweiten Bypassschalter 52 angeordnet ist, wobei in der ersten Bypassstrecke 81 eine zweite Strommessanordnung 55 angeordnet ist, welche mit der ersten elektronischen Steuereinheit 13 verbunden ist, wobei die erste elektronische Steuereinheit 13 weiters dazu ausgebildet ist, den zweiten Bypassschalter 52 und die vierte Halbleiterschaltungsanordnung 54 anzusteuern.

Die erste elektronische Steuereinheit 13 regelt die zweite Halbleiterschaltungsanordnung 14 und die vierte Halbleiterschaltungsanordnung 54 zum Angleichen einer ersten Stromstärke über die erste Außenleiterstrecke 2 und einer zweiten Stromstärke über die erste Bypassstrecke 81, und/oder die erste elektronische Steuereinheit 13 schaltet bei einer ersten Stromstärke und/oder einer zweiten Stromstärke unterhalb eines vorgebbaren Grenzwertes die ersten Bypassstrecke 81 ab.

Dadurch ist es möglich eine hybride Außenleiterstrecke 2 durch parallel schalten wenigstens einer Bypassstrecke 81, 82 zu entlasten, ohne dass es dazu kommt, dass die gesamte Strombelastung oder zumindest ein überwiegender Teil der Strombelastung von nur einer der beteiligten Strecken 2, 81, 82 bewältigt werden muss. Dadurch kann verhindert werden, dass eine der beteiligten Strecken durch übermäßige Verlustleistung schneller altert und ausfällt, als die wenigstens eine weitere Strecke. Dadurch kann weiters verhindert werden, dass es im Falle einer Notabschaltung zu einem Totalausfall kommt.

Sämtliche Ausführungen zu den Ausführungsformen gemäß den Fig. 1 bis 3 sind - sofern diese nicht im offensichtlichen Widerspruch zum Niederspannungs-Schutzschaltgerät 1 gemäß Fig. 4 stehen anzuwenden. Insbesondere sämtliche Ausführungen zu Einsatzumgebung und den bevorzugten Ausführungsformen der beteiligten Komponenten, weshalb gegenständlich auf eine Wiedergabe dieser bevorzugten Ausbildungen verzichtet wird.

Gegenüber den Ausführungsform gemäß den Fig. 1 und 2 weist das Niederspannungs-Schutzschaltgerät 1 gemäß Fig. 4 nur eine einzige Außenleiterstrecke 2, umfassend die erste und zweite Halbleiterschaltungsanordnung 11, 14, auf.

Anstelle weiterer Außenleiterstrecken ist wenigstens eine erste Bypassstrecke 81 vorgesehen, welche eine zweite Strommessanordnung 55, einen zweiten Bypassschalter 52 sowie eine vierte Halbleiterschaltungsanordnung 54 aufweist.

Gemäß Fig. 4 ist weiters eine entsprechend ausgebildete zweite Bypassstrecke 82 vorgesehen, wobei weitere Bypassstrecken vorgesehen sein können.

Das Niederspannungs-Schutzschaltgerät 1 weist weiters eine sog. globale Strommessanordnung 83 auf, welches den Gesamtstrom vor der Aufteilung in Teilströme misst und an die erste Steuereinheit 13 übermittelt.

Es wurde betreffend der Bezeichnung der einzelnen Halbleiterschaltungsanordnungen die eingangs eingeführte Nomenklatur beibehalten.

## Patentansprüche

1. Elektrische Schutzschaltungsanordnung (50) umfassend eine erste Außenleiterstrecke (2), wobei in der ersten Außenleiterstrecke (2) eine zweite Halbleiterschaltungsanordnung (14) angeordnet ist, wobei in der ersten Außenleiterstrecke (2) eine erste Strommessanordnung (12) angeordnet ist, welche mit einer ersten elektronischen Steuereinheit (13) verbunden ist, wobei die erste elektronische Steuereinheit (13) dazu ausgebildet ist, die zweite Halbleiterschaltungsanordnung (14) anzusteuern, wobei die elektrische Schutzschaltungsanordnung (50) weiters eine zweiten Außenleiterstrecke (51) aufweist, wobei die erste Außenleiterstrecke (2) schaltungstechnisch parallel zur zweiten Außenleiterstrecke (51) angeordnet ist, wobei in der zweiten Außenleiterstrecke (51) eine vierte Halbleiterschaltungsanordnung (54) angeordnet ist, wobei in der zweiten Außenleiterstrecke (51) eine zweite Strommessanordnung (55) angeordnet ist, wobei die zweite Strommessanordnung (55) mit einer zweiten elektronischen Steuereinheit (56) verbunden ist, wobei die zweite elektronische Steuereinheit (56) dazu ausgebildet ist, die vierte Halbleiterschaltungsanordnung (54) anzusteuern, und die erste elektronische Steuereinheit (13) und die zweite elektronische Steuereinheit (56) nachrichtentechnisch verbunden sind, dadurch gegengezeichnet dass die erste elektronische Steuereinheit (13) die zweite Halbleiterschaltungsanordnung (14) und die zweite elektronische Steuereinheit (56) die vierte Halbleiterschaltungsanordnung (54) zum Angleichen einer ersten Stromstärke über die erste Außenleiterstrecke (2) und einer zweiten Stromstärke über die zweite Außenleiterstrecke (51) regeln.

2. Elektrische Schutzschaltungsanordnung (50) nach Anspruch 1, **dadurch gekennzeichnet, dass** in der ersten Außenleiterstrecke (2) ein erster mechanischer Bypassschalter (8) angeordnet ist, dass eine erste Halbleiterschaltungsanordnung (11) parallel zum ersten Bypassschalter (8) geschaltet ist, dass die zweite Halbleiterschaltungsanordnung (14) schaltungstechnisch seriell zum ersten Bypassschalter (8) und parallel zur ersten Halbleiterschaltungsanordnung (11) angeordnet ist, dass die erste elektronische Steuereinheit (13) dazu ausgebildet ist, weiters den ersten Bypassschalter (8) und die erste Halbleiterschaltungsanordnung (11) anzusteuern, dass in der zweiten Außenleiterstrecke (51) ein zweiter mechanischer Bypassschalter (52) angeordnet ist, dass eine dritte Halbleiterschaltungsanordnung (53) parallel zum zweiten Bypassschalter (52) geschaltet ist, dass die vierte Halbleiterschaltungsanordnung (54) schaltungstechnisch seriell zum zweiten Bypassschalter (52) und parallel zur dritten Halbleiterschaltungsanordnung (53) angeordnet ist, und dass die zweite elektronische Steuereinheit (56) dazu ausgebildet ist, weiters den zweiten Bypassschalter (52) und die dritte Halbleiterschaltungsanordnung (53) anzusteuern.

3. Elektrische Schutzschaltungsanordnung (50) nach Anspruch 1 oder 2, **dadurch gekennzeichnet, dass** die zweite Halbleiterschaltungsanordnung (14) und die vierte Halbleiterschaltungsanordnung (54) jeweils umfassend Halbleiter, insbesondere MOSFET (15), ausgebildet sind.

4. Elektrische Schutzschaltungsanordnung (50) nach Anspruch 1, 2 oder 3, **dadurch gekennzeichnet, dass** die zweite Halbleiterschaltungsanordnung (14) und die vierte Halbleiterschaltungsanordnung (54) bidirektional, insbesondere als bidirektionaler 4-Quadrantenschalter, ausgebildet sind.

5. Elektrische Schutzschaltungsanordnung (50) nach Anspruch 3 oder 4, **dadurch gekennzeichnet, dass** die erste elektronische Steuereinheit (13) eine Gate-Spannung der zweiten Halbleiterschaltungsanordnung (14) regelt, und dass die zweite elektronische Steuereinheit (56) eine Gate-Spannung der vierten Halbleiterschaltungsanordnung (54) regelt.

6. Elektrische Schutzschaltungsanordnung (50) nach einem der Ansprüche 1 bis 5, **dadurch gekennzeichnet, dass** die erste Außenleiterstrecke (2), die zweite Halbleiterschaltungsanordnung (14), die erste Strommessanordnung (12) und die erste elektronische Steuereinheit (13) in einem ersten Niederspannungs-Schutzschaltgerät (1) umfassend ein erstes Isolierstoffgehäuse angeordnet sind, dass das erste Niederspannungs-Schutzschaltgerät (1) eine erste Kommunikationsschnittstelle (57) aufweist, welche mit der ersten elektronischen Steuereinheit (13) nachrichtentechnisch verbunden ist,
dass die zweite Außenleiterstrecke (51), die vierte Halbleiterschaltungsanordnung (54), die zweite Strommessanordnung (55) und die zweite elektronischen Steuereinheit (56) in einem zweiten Niederspannungs-Schutzschaltgerät (62) umfassend ein zweites Isolierstoffgehäuse angeordnet sind, dass das zweite Niederspannungs-Schutzschaltgerät (62) eine zweite Kommunikationsschnittstelle aufweist, welche mit der zweiten elektronischen Steuereinheit (56) nachrichtentechnisch verbunden ist
und dass die erste Kommunikationsschnittstelle (57) mit der zweiten Kommunikationsschnittstelle nachrichtentechnisch verbunden ist.

7. Elektrische Schutzschaltungsanordnung (50) nach einem der Ansprüche 1 bis 6, **dadurch gekennzeichnet, dass** die erste Außenleiterstrecke (2), die zweite Halbleiterschaltungsanordnung (14), die erste Strommessanordnung (12) und die ersten elektronischen Steuereinheit (13), die zweite Außenleiterstrecke (51), die vierte Halbleiterschaltungsanordnung (54), die zweite Strommessanordnung (55) und die zweite elektronische Steuereinheit (56) gemeinsam in ein und demselben ersten Niederspannungs-Schutzschaltgerät (1) umfassend ein erstes Isolierstoffgehäuse angeordnet sind, und dass die erste elektronische Steuereinheit (13) mit der zweiten elektronischen Steuereinheit (56) nachrichtentechnisch, insbesondere schaltungstechnisch, verbunden ist.

8. Elektrische Schutzschaltungsanordnung (50) nach Anspruch 7, **dadurch gekennzeichnet, dass** die erste elektronische Steuereinheit (13) und die zweite elektronische Steuereinheit (56) einstückig, insbesondere zumindest teilweise in einem gemeinsamen Chip, ausgebildet sind.

9. Elektrische Schutzschaltungsanordnung (50) nach einem der Ansprüche 1 bis 8, **dadurch gekennzeichnet, dass** die elektrische Schutzschaltungsanordnung (50) wenigstens eine dritte Außenleiterstrecke aufweist, welche zur ersten Außenleiterstrecke (2) und zweiten Außenleiterstrecke (51) schaltungstechnisch parallel angeordnet ist.

10. Elektrische Schutzschaltungsanordnung (50) nach einem der Ansprüche 1 bis 9, **dadurch gekennzeichnet, dass** die erste elektronische Steuereinheit (13) und die zweite elektronische Steuereinheit (56) bei einer ersten Stromstärke und/oder einer zweiten Stromstärke unterhalb eines vorgebbaren Grenzwertes die zweite Außenleiterstrecke (51) abschalten.

## Claims

1. Electrical protective circuit arrangement (50) comprising a first outer conductor path (2), wherein a second semiconductor circuit arrangement (14) is arranged in the first outer conductor path (2), wherein a first current measuring arrangement (12) which is connected to a first electronic control unit (13) is arranged in the first outer conductor path (2), wherein the first electronic control unit (13) is designed to control the second semiconductor circuit arrangement (14), wherein the electrical protective circuit arrangement (50) further comprises a second outer conductor path (51), wherein the first outer conductor circuit (2) is arranged in parallel with the second outer conductor path (51) in terms of circuitry, wherein a fourth semiconductor circuit arrangement (54) is arranged in the second outer conductor path (51), Wherein a second current measuring arrangement (55) is arranged in the second outer conductor path (51), wherein the second current measuring arrangement (55) is connected to a second electronic control unit (56), wherein the second electronic control unit (56) is designed to control the fourth semiconductor circuit arrangement (54),
and the first electronic control unit (13) and the second electronic control unit (56) are communicatively connected, **characterized in that** the first electronic control unit (13) controls the second semiconductor circuit arrangement (14) and the second electronic control unit (56) controls the fourth semiconductor circuit arrangement (54) in order to match a first current intensity over the first outer conductor path (2) and a second current intensity over the second outer conductor path (51).

2. Electrical protective circuit arrangement (50) according to claim 1, **characterized in that** a first mechanical bypass switch (8) is arranged in the first outer conductor path (2), that a first semiconductor circuit arrangement (11) is connected in parallel with the first bypass switch (8), that the second semiconductor circuit arrangement (14) is arranged in series with the first bypass switch (8) and in parallel with the first semiconductor circuit arrangement (11) in terms of circuitry, that the first electronic control unit (13) is designed to further control the first bypass switch (8) and the first semiconductor circuit arrangement (11), that a second mechanical bypass switch (52) is arranged in the second outer conductor path (51), that a third semiconductor circuit arrangement (53) is connected in parallel with the second bypass switch (52), that the fourth semiconductor circuit arrangement (54) is arranged in series with the second bypass switch (52) and in parallel with the third semiconductor circuit arrangement (53) in terms of circuitry, and **in that** the second electronic control unit (56) is designed to further control the second bypass switch (52) and the third semiconductor circuit arrangement (53).

3. Electrical protective circuit arrangement (50) according to either claim 1 or claim 2, **characterized in that** the second semiconductor circuit arrangement (14) and the fourth semiconductor circuit arrangement (54) are each formed comprising semiconductors, in particular MOSFETs (15).

4. Electrical protective circuit arrangement (50) according to claim 1, 2 or 3, **characterized in that** the second semiconductor circuit arrangement (14) and the fourth semiconductor circuit arrangement (54) are designed to be bidirectional, in particular as a bidirectional 4-quadrant switch.

5. Electrical protective circuit arrangement (50) according to either claim 3 or claim 4, **characterized in that** the first electronic control unit (13) controls a gate voltage of the second semiconductor circuit arrangement (14), and **in that** the second electronic control unit (56) controls a gate voltage of the fourth semiconductor circuit arrangement (54).

6. Electrical protective circuit arrangement (50) according to any of claims 1 to 5, **characterized in that** the first outer conductor path (2), the second semiconductor circuit arrangement (14), the first current measuring arrangement (12) and the first electronic control unit (13) are arranged in a first low-voltage protective switching device (1) comprising a first insulating-material housing, that the first low-voltage protective switching device (1) has a first communication interface (57) which is communicatively connected to the first electronic control unit (13),
that the second outer conductor path (51), the fourth semiconductor circuit arrangement (54), the second current measuring arrangement (55) and the second electronic control unit (56) are arranged in a second low-voltage protective switching device (62) comprising a second insulating-material housing, that the second low-voltage protective switching device (62) has a second communication interface which is communicatively connected to the second electronic control unit (56),
and that the first communication interface (57) is communicatively connected to the second communication interface.

7. Electrical protective circuit arrangement (50) according to any of claims 1 to 6, **characterized in that** the first outer conductor path (2), the second semiconductor circuit arrangement (14), the first current measuring arrangement (12) and the first electronic control unit (13), the second outer conductor path (51), the fourth semiconductor circuit arrangement (54), the second current measuring arrangement (55) and the second electronic control unit (56) are arranged together in one and the same first low-voltage protective switching device (1) comprising a first insulating material housing, and **in that** the first electronic control unit (13) is communicatively connected to the second electronic control unit (56), in particular in terms of circuitry.

8. Electrical protective circuit arrangement (50) according to claim 7, **characterized in that** the first electronic control unit (13) and the second electronic control unit (56) are formed in one piece, in particular at least partially in a common chip.

9. Electrical protective circuit arrangement (50) according to any of claims 1 to 8, **characterized in that** the electrical protective circuit arrangement (50) has at least one third outer conductor path which is arranged in parallel with the first outer conductor path (2) and the second outer conductor path (51) in terms of circuitry.

10. Electrical protective circuit arrangement (50) according to any of claims 1 to 9, **characterized in that** the first electronic control unit (13) and the second electronic control unit (56) switch off the second outer conductor path (51) at a first current intensity and/or a second current intensity below a predefinable limit value.

## Revendications

1. Agencement électrique de circuit protecteur (50) comprenant un premier trajet conducteur externe (2), un deuxième agencement de circuit à semi-conducteur (14) étant disposé dans le premier trajet conducteur externe (2), un premier agencement de mesure de courant (12) étant disposé dans le premier trajet conducteur externe (2), lequel agencement de mesure de courant connecté à une première unité de commande électronique (13), la première unité de commande électronique (13) étant conçue pour commander le deuxième agencement de circuit à semi-conducteur (14), l'agencement électrique de circuit protecteur (50) présentant en outre un second trajet conducteur externe (51), le premier trajet conducteur externe (2) étant disposé, d'un point de vue technique de commutation, en parallèle avec le second trajet conducteur externe (51), un quatrième agencement de circuit à semi-conducteur (54) étant disposé dans le second trajet conducteur externe (51), un second agencement de mesure de courant (55) étant disposé dans le second trajet conducteur externe (51), le second agencement de mesure de courant (55) étant connecté à une seconde unité de commande électronique (56), la seconde unité de commande électronique (56) étant conçue pour commander le quatrième agencement de circuit à semi-conducteur (54),
et la première unité de commande électronique (13) et la seconde unité de commande électronique (56) étant reliées d'un point de vue technique de messagerie, **caractérisé en ce que** la première unité de commande électronique (13) régule le deuxième agencement de circuit à semi-conducteur (14) et la seconde unité de commande électronique (56) régule le quatrième agencement de circuit à semi-conducteur (54) pour l'uniformisation d'une première intensité de courant sur le premier trajet conducteur externe (2) et une seconde intensité du courant sur le second trajet conducteur externe (51).

2. Agencement électrique de circuit protecteur (50) selon la revendication 1 **caractérisé en ce qu**'un premier commutateur de dérivation mécanique (8) est disposé dans le premier trajet conducteur externe (2), en ce qu'un premier agencement de circuit à semi-conducteur (11) est commuté en parallèle par rapport au premier commutateur de dérivation (8), en ce que le deuxième agencement de circuit à semi-conducteur (14) est disposé, d'un point de vue technique de commutation, en série par rapport au premier commutateur de dérivation (8) et en parallèle par rapport au premier agencement de circuit à semi-conducteur (11), en ce que la première unité de commande électronique (13) est conçue pour commander en outre le premier commutateur de dérivation (8) et le premier agencement de circuit à semi-conducteur (11), en ce qu'un second commutateur de dérivation mécanique (52) est disposé dans le second trajet conducteur externe (51), en ce qu'un troisième agencement de circuit à semi-conducteur (53) est commuté en parallèle par rapport au second commutateur de dérivation (52), en ce que le quatrième agencement de circuit à semi-conducteur (54) est disposé d'un point de vue technique de commutation en série par rapport au second commutateur de dérivation (52) et en parallèle par rapport au troisième agencement de circuit à semi-conducteur (53) et en ce que la seconde unité de commande électronique (56) est conçue pour commander en outre le second commutateur de dérivation (52) et le troisième agencement de circuit à semi-conducteur (53).

3. Agencement électrique de circuit protecteur (50) selon la revendication 1 ou 2, **caractérisé en ce que** le deuxième agencement de circuit à semi-conducteur (14) et le quatrième agencement de circuit à semi-conducteur (54) sont conçus de manière à comprendre respectivement des semi-conducteurs, en particulier sous forme de MOSFET (15).

4. Agencement électrique de circuit protecteur (50) selon la revendication 1, 2 ou 3, **caractérisé en ce que** le deuxième agencement de circuit à semi-conducteur (14) et le quatrième agencement de circuit à semi-conducteur (54) sont conçus de manière bidirectionnelle, en particulier comme un commutateur bidirectionnel à 4 quadrants.

5. Agencement électrique de circuit protecteur (50) selon la revendication 3 ou 4, **caractérisé en ce que** la première unité de commande électronique (13) régule une tension de grille du deuxième agencement de circuit à semi-conducteur (14) et **en ce que** la seconde unité de commande électronique (56) régule une tension de grille du quatrième agencement de circuit à semi-conducteur (54).

6. Agencement électrique de circuit protecteur (50) selon l'une des revendications 1 à 5, **caractérisé en ce que** le premier trajet conducteur externe (2), le deuxième agencement de circuit à semi-conducteur (14), le premier agencement de mesure de courant (12) et la première unité de commande électronique (13) sont disposés dans un premier disjoncteur basse tension (1) comprenant un premier boîtier isolant, **en ce que** le premier disjoncteur basse tension (1) présente une première interface de communication (57) qui est reliée d'un point de vue technique de messagerie avec la première unité de commande électronique (13),
**en ce que** le second trajet conducteur externe (51), le quatrième agencement de circuit à semi-conducteur (54), le second agencement de mesure de courant (55) et la seconde unité de commande électronique (56) sont disposés dans un second disjoncteur basse tension (62) comprenant un second boîtier isolant, **en ce que** le second disjoncteur basse tension (62) présente une seconde interface de communication qui est reliée d'un point de vue technique de messagerie avec la seconde unité de commande électronique (56)
et **en ce que** la première interface de communication (57) est reliée d'un point de vue technique de messagerie à la seconde interface de communication.

7. Agencement électrique de circuit protecteur (50) selon l'une des revendications 1 à 6, **caractérisé en ce que** le premier trajet conducteur externe (2), le deuxième agencement de circuit à semi-conducteur (14), le premier agencement de mesure de courant (12) et la première unité de commande électronique (13), le second trajet conducteur externe (51), le quatrième agencement de circuit à semi-conducteur (54), le second agencement de mesure de courant (55) et la seconde unité de commande électronique (56) sont disposés ensemble dans un seul et même premier disjoncteur basse tension (1) comprenant un premier boîtier isolant et **en ce que** la première unité de commande électronique (13) est reliée d'un point de vue technique de messagerie, en particulier d'un point de vue de technique de commutation, à la seconde unité de commande électronique (56).

8. Agencement électrique de circuit protecteur (50) selon la revendication 7, **caractérisé en ce que** la première unité de commande électronique (13) et la seconde unité de commande électronique (56) sont conçues d'une seule pièce, en particulier au moins partiellement dans une puce commune.

9. Agencement électrique de circuit protecteur (50) selon l'une des revendications 1 à 8, **caractérisé en ce que** l'agencement électrique de circuit protecteur (50) présente au moins un troisième trajet conducteur externe, qui est disposé d'un point de vue technique de commutation en parallèle par rapport au premier trajet conducteur externe (2) et au second trajet conducteur externe (51).

10. Agencement électrique de circuit protecteur (50) selon l'une des revendications 1 à 9, **caractérisé en ce que** la première unité de commande électronique (13) et la seconde unité de commande électronique (56) coupent le second trajet conducteur externe (51) dans le cas d'une première intensité de courant et/ou d'une seconde intensité de courant inférieure(s) à une valeur limite pouvant être spécifiée.
